# EUROPEAN PATENT SPECIFICATION

(11) **EP 3 788 918 B1**
(45) Date of publication and mention of the grant of the patent: **25.01.2023**
(21) Application number: 19216149.5
(22) Date of filing: 13.12.2019
(51) Int. Cl.: A47J 31/46, A47J 31/44

(54) **MULTI-POSITION SHUTTLE VALVE ASSEMBLY FOR AN AIRCRAFT BREWING APPARATUS**
MEHRPOSITIONEN-WECHSELVENTILANORDNUNG FÜR EINE FLUGZEUGBRÜHVORRICHTUNG
ENSEMBLE VANNE D'ARRÊT À PLUSIEURS POSITIONS POUR APPAREIL D'INFUSION D'AÉRONEF

(30) Priority: 05.09.2019 US 201916561514
(43) Date of publication of application: 10.03.2021
(73) Proprietor: B/E Aerospace, Inc., Winston-Salem, NC 27105 (US)
(72) Inventor: DEVLIN, Byron A., Parkville, MO 64152 (US); DEBALD, Keith R., Gardner, KS 66030 (US); SERFLING, Anthony, Kansas City, MO 64108 (US)
(74) Representative: Dehns

(56) References cited:
- US-A1- 2004 255 789
- US-A1- 2011 005 407

## Description

### BACKGROUND

Select brewing apparatuses require frothed milk to produce drinks such as espressos and cappuccinos. Frothing milk for an espresso may be accomplished in a decanter with a frothing wand (with the frothed milk then poured into an espresso shot). Frothing milk for a cappuccino may be accomplished with a froth module coupled (either physically or fluidically) to the select brewing apparatuses. US 2004/0255789 discloses a multi-position shuttle valve assembly which is translated to a second position depending on a froth module being installed, wherein in said second position steam is diverted to said froth module. In a first position, steam is diverted to a release line.

### SUMMARY

According to a first aspect, there is provided a multi-position shuttle valve assembly according to claim 1.

In some embodiments of the multi-position shuttle valve assembly, the shuttle is configured to translate from the first position to the second position following a providing of a force by the froth module on the shuttle when the froth module is installed on the housing.

In some embodiments of the multi-position shuttle valve assembly, the multi-position shuttle valve assembly further includes a spring configured to provide a return force on the shuttle. The shuttle is configured to translate from the second position to the first position when the froth module is removed from the housing, the translation of the shuttle being dependent on the return force provided by the spring.

In some embodiments of the multi-position shuttle valve assembly, the multi-position shuttle valve assembly further includes an electro-mechanical solenoid valve in fluid communication with the at least one flow path. The electro-mechanical solenoid valve is configured to drain the steam from the at least one flow path into a fluid tank of the aircraft brewing apparatus when open. The electro-mechanical solenoid valve is configured to allow the steam to pass through the at least one flow path when closed.

In some embodiments of the multi-position shuttle valve assembly, the multi-position shuttle valve assembly further includes a counter-pressure valve assembly configured to fit within a cavity defined by one or more interior surfaces of the housing. The defined cavity is in fluid communication with the at least one flow path. The counter-pressure valve assembly includes a poppet. The counter-pressure valve assembly further includes a spring configured to provide a return force to the poppet. The poppet is in a first position configured to block the at least one flow path when steam having a first amount of steam pressure engages the poppet. The poppet is in a second position configured to allow passage through the at least one flow path when steam having a second amount of steam pressure engages the poppet.

In some embodiments of the multi-position shuttle valve assembly, the first amount of fluid pressure is less than the return force provided by the spring and the second amount of fluid pressure is greater than the return force provided by the spring.

In some embodiments of the multi-position shuttle valve assembly, the multi-position shuttle valve assembly is configured to receive a descale module. The descale module is configured to provide the multi-position shuttle valve assembly with a descale fluid. The descale fluid is configured to flow through the at least one flow path and the shuttle cavity.

In some embodiments of the multi-position shuttle valve assembly, the multi-position shuttle valve assembly further includes a counter-pressure valve assembly configured to fit within a cavity defined by one or more interior surfaces of the housing. The defined cavity is in fluid communication with the at least one flow path. The counter-pressure valve assembly includes a poppet. The counter-pressure valve assembly further includes a spring configured to provide a return force to the poppet. The poppet is in a first position configured to block the at least one flow path when descale fluid having a first amount of steam pressure engages the poppet. The poppet is in a second position configured to allow passage through the at least one flow path when descale fluid having a second amount of steam pressure engages the poppet.

In some embodiments of the multi-position shuttle valve assembly, the first amount of fluid pressure is less than the return force provided by the spring and the second amount of fluid pressure is greater than the return force provided by the spring.

In some embodiments of the multi-position shuttle valve assembly, the multi-position shuttle valve assembly further includes a reed switch configured to detect an installation of the descale module.

In some embodiments of the multi-position shuttle valve assembly, the multi-position shuttle valve assembly further includes a reed switch configured to detect the position of the shuttle within the shuttle cavity.

In some embodiments of the multi-position shuttle valve assembly, the multi-position shuttle valve assembly further includes a reed switch configured to detect an installation of a froth module on the housing.

In some embodiments of the multi-position shuttle valve assembly, the housing includes a front housing section and a rear housing section. The front surface of the housing is a front surface of the front housing section. A first portion of the shuttle cavity is defined by one or more interior surfaces of the front housing section and a second portion of the shuttle cavity defined by one or more interior surfaces of the rear housing section.

In some embodiments of the multi-position shuttle valve assembly, the aircraft brewing apparatus is installable within an aircraft galley of an aircraft.

An aircraft brewing apparatus is also disclosed. In one or more embodiments, the aircraft brewing apparatus includes a froth heater. The aircraft brewing apparatus further includes a froth wand. The aircraft brewing apparatus further includes a multi-position shuttle valve assembly according to any of the claims 1 to 14. In particular the multi-position shuttle valve assembly includes a housing with at least one flow path. The at least one flow path is configured to receive steam from the froth heater. The multi-position shuttle valve assembly further includes a shuttle. A first portion of the shuttle is configured to extrude from a front surface of the housing. A second portion of the shuttle is configured to fit within a shuttle cavity defined by one or more interior surfaces of the housing. The at least one flow path is configured to direct the steam to the defined cavity. The shuttle is configured to divert the steam to the froth wand when the shuttle is in a first position. The shuttle is configured to divert the steam to a froth module installed on the housing when the shuttle is in a second position. A translation of the shuttle between the first position and the second position is dependent on the froth module being installed on the housing.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is a perspective view of a multi-position shuttle valve assembly for an aircraft brewing apparatus, in accordance with one or more embodiments of the disclosure;
FIG. 1B is a perspective view of the multi-position shuttle valve assembly for an aircraft brewing apparatus, in accordance with one or more embodiments of the disclosure;
FIG. 2 is a front elevation view of the multi-position shuttle valve assembly for an aircraft brewing apparatus, in accordance with one or more embodiments of the disclosure;
FIG. 3 is a first side elevation view of the multi-position shuttle valve assembly for an aircraft brewing apparatus, in accordance with one or more embodiments of the disclosure;
FIG. 4 is a rear elevation view of the multi-position shuttle valve assembly for an aircraft brewing apparatus, in accordance with one or more embodiments of the disclosure;
FIG. 5 is a second side elevation view of the multi-position shuttle valve assembly for an aircraft brewing apparatus, in accordance with one or more embodiments of the disclosure;
FIG. 6 is a top plan view of the multi-position shuttle valve assembly for an aircraft brewing apparatus, in accordance with one or more embodiments of the disclosure;
FIG. 7 is a bottom plan view of the multi-position shuttle valve assembly for an aircraft brewing apparatus, in accordance with one or more embodiments of the disclosure;
FIG. 8 is a perspective view of a multi-position shuttle of the multi-position shuttle valve assembly for an aircraft brewing apparatus, in accordance with one or more embodiments of the disclosure;
FIG. 9 is a block diagram of a portion of a froth subsystem through a front housing section and a rear housing section of the multi-position shuttle valve assembly for an aircraft brewing apparatus, in accordance with one or more embodiments of the disclosure;
FIG. 10 is an exploded perspective view of the multi-position shuttle valve assembly for an aircraft brewing apparatus, in accordance with one or more embodiments of the disclosure;
FIG. 11 is a block diagram of an aircraft with a brewing apparatus including the multi-position shuttle valve assembly, in accordance with one or more embodiments of the disclosure; and
FIG. 12 is a block diagram of the aircraft with the brewing apparatus including the multi-position shuttle valve assembly, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

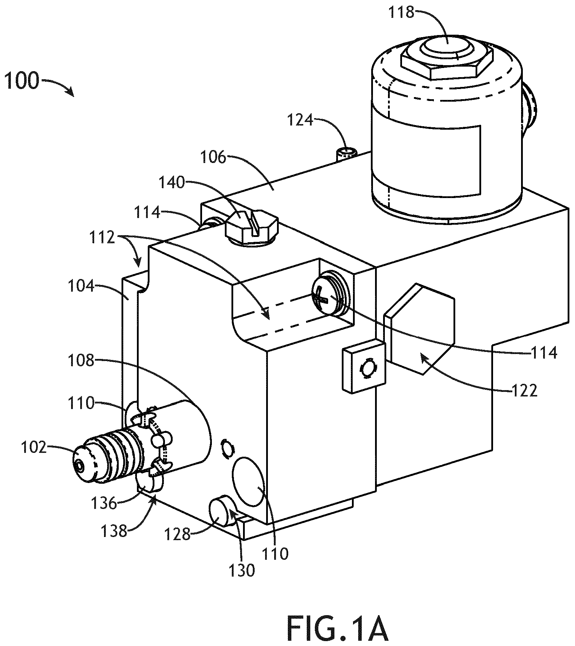

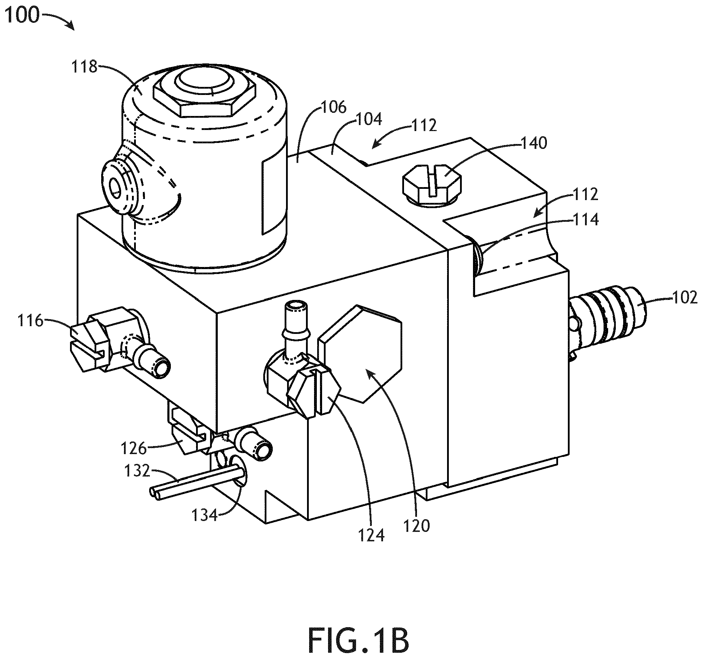

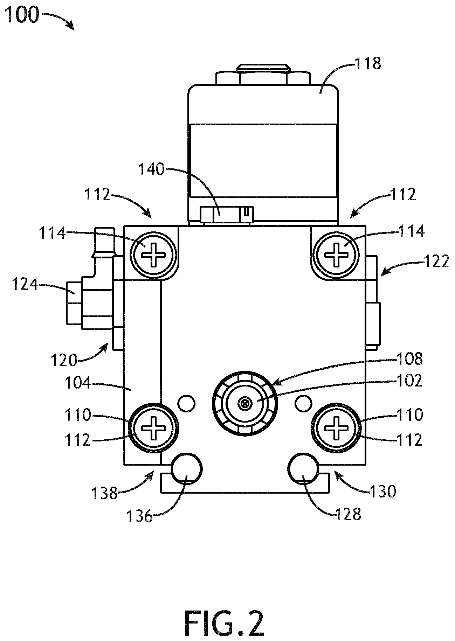

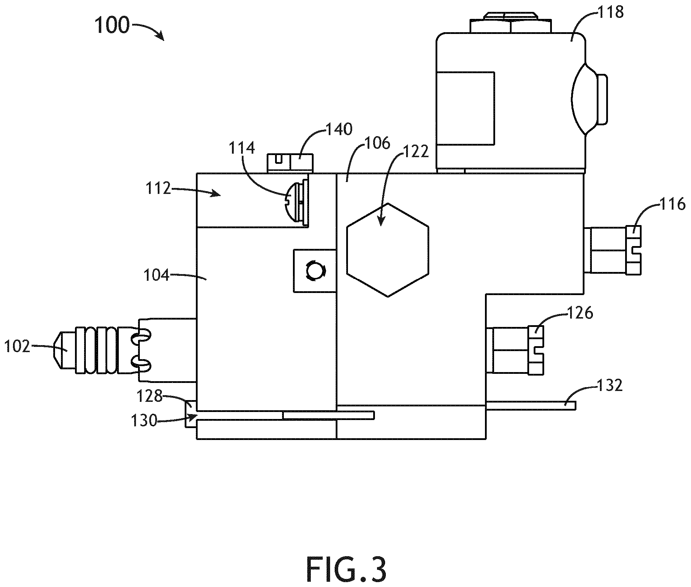

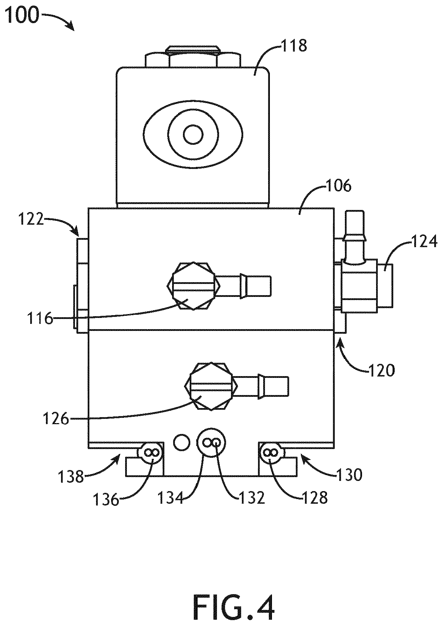

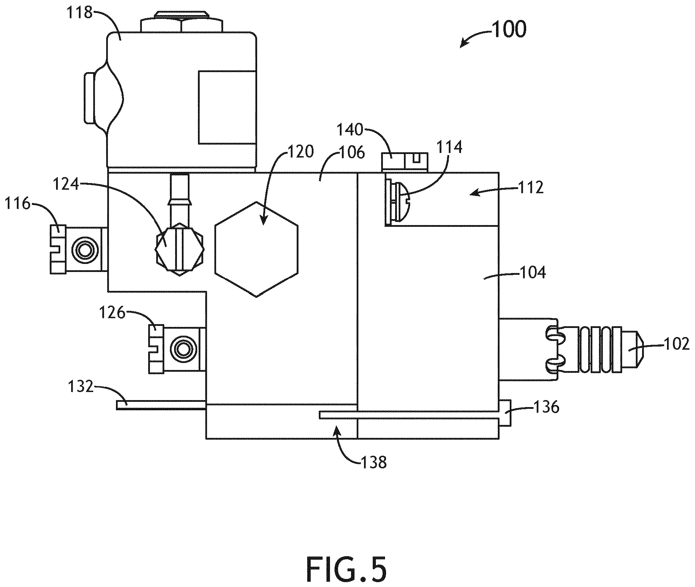

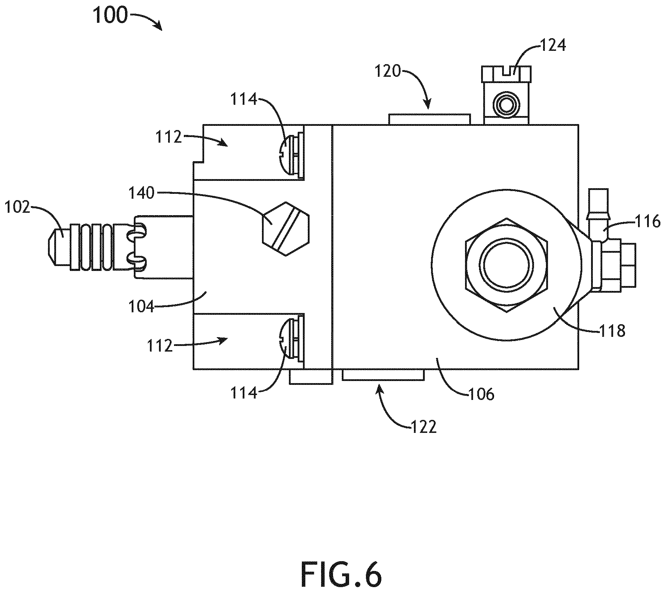

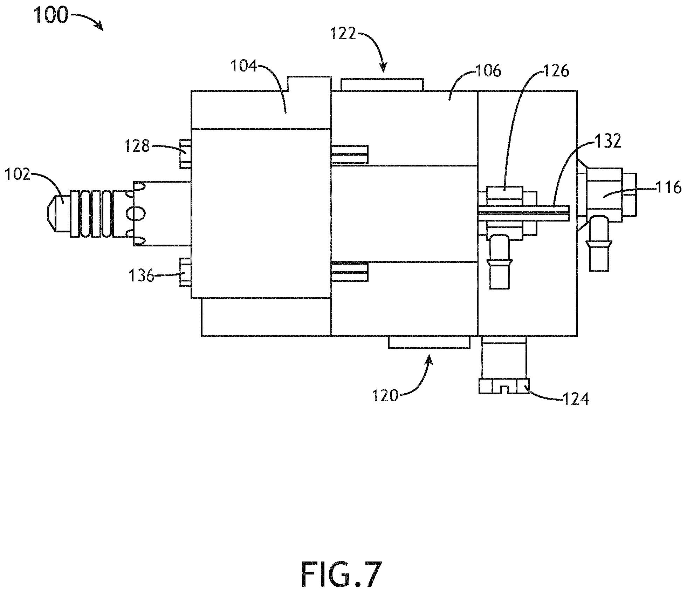

FIGS. 1A-12 generally illustrate a multi-position shuttle valve assembly 100 for an aircraft brewing apparatus 1100, in accordance with one or more embodiments of the disclosure. It is noted herein that "multi-position shuttle valve assembly 100" and variants of "multi-position shuttle valve assembly 100" (e.g., "shuttle valve assembly 100," "assembly 100," or the like) may be considered equivalent for purposes of the disclosure. In addition, it is noted herein that "aircraft brewing apparatus 1100" and variants of "aircraft brewing apparatus 1100" (e.g., "brewing apparatus 1100," "apparatus 1100," or the like) may be considered equivalent for purposes of the disclosure.

FIGS. 1A-7 generally illustrate the multi-position shuttle valve assembly 100, in accordance with one or more embodiments of the disclosure.

The multi-position shuttle valve assembly 100 may include a shuttle 102. The multi-position shuttle valve assembly 100 may include a shuttle valve housing. The shuttle valve housing of the multi-position shuttle valve assembly 100 may include a front housing section 104 and a rear housing section 106. The front housing section 104 may include an opening 108 configured to receive at least a portion of the shuttle 102.

The front housing section 104 may include an opening 110 and/or a cut-out 112 configured to receive fastener hardware 114. The front housing section 104 and the rear housing section 106 may be coupled together via the fastener hardware 114. It is noted herein, however, that the front housing section 104 and the rear housing section 106 may instead be coupled together by an interlocking assembly, an exterior clamping device, an adhesive, or the like. Therefore, the above description should not be interpreted as a limitation on the disclosure but merely an illustration.

Although embodiments of the present disclosure are directed to the shuttle valve housing of the multi-position shuttle valve assembly 100 including the front housing section 104 and the rear housing section 106, it is noted herein the shuttle valve housing of the multi-position shuttle valve assembly 100 may instead be fabricated as a single unit (e.g., fabricated via casting, additive manufacturing such as three-dimensional (3D) printing, or the like). Therefore, the above description should not be interpreted as a limitation on the disclosure but merely an illustration.

The multi-position shuttle valve assembly 100 may include a steam fitting 116. For example, the steam fitting 116 may be positioned in the rear housing section 106.

The multi-position shuttle valve assembly 100 may include an electro-mechanical solenoid valve 118. The multi-position shuttle valve assembly 100 may include a counter-pressure valve assembly 120. The multi-position shuttle valve assembly 100 may include a counter-pressure valve assembly 122. The multi-position shuttle valve assembly 100 may include a solenoid valve outlet fitting 124.

Steam entering the multi-position shuttle valve assembly 100 via the steam fitting 116 may encounter the electro-mechanical solenoid valve 118, one or more components of the counter-pressure valve assembly 120, and/or one or more components of the counter-pressure valve assembly 122 prior to encountering the shuttle 102. Depending on the position of the shuttle 102, the steam exits the multi-position shuttle valve assembly 100 via a front portion of the shuttle 102 (e.g., when the shuttle 102 is in an open position) or via a froth wand fitting 126 (e.g., when the shuttle 102 is in a closed position).

The multi-position shuttle valve assembly 100 may include one or more sensors. The one or more sensors may include, but are not limited to, one or more reed switches, where a reed switch is closed when a magnet attached to a component of the multi-position shuttle valve assembly 100 is in close enough proximity to the reed switch to cause the reeds to move into contact, indicating when the component is moved or installed. For example, the multi-position shuttle valve assembly 100 may include a reed switch 128 set within a cavity 130 defined within the shuttle valve housing, a reed switch 132 set within a cavity 134 defined within the shuttle valve housing, and a reed switch 136 set within a cavity 138 defined within the shuttle valve housing.

The multi-position shuttle valve assembly 100 may include a fitting 140. The fitting 140 may be configured to provide access to a flow path within the shuttle valve housing. The fitting 140 may be configured to couple to one or more accessories (e.g., brewing accessories, cleaning accessories, or the like) for a brewing apparatus. The fitting 140 may be removable (e.g., act as a cap) from the shuttle valve housing.

It is noted herein that one or more of the steam fitting 116, the solenoid valve outlet fitting 124, the froth wand fitting 126, and/or the fitting 140 may include one or more tube or hose couplers. For example, the one or more tube or hose couplers may include, but are not limited to, one or more hose barbs, threading (e.g., a male or female-threaded port), a push-to-connect fitting, an external clamp, or any other tube or hose coupler known in the art.

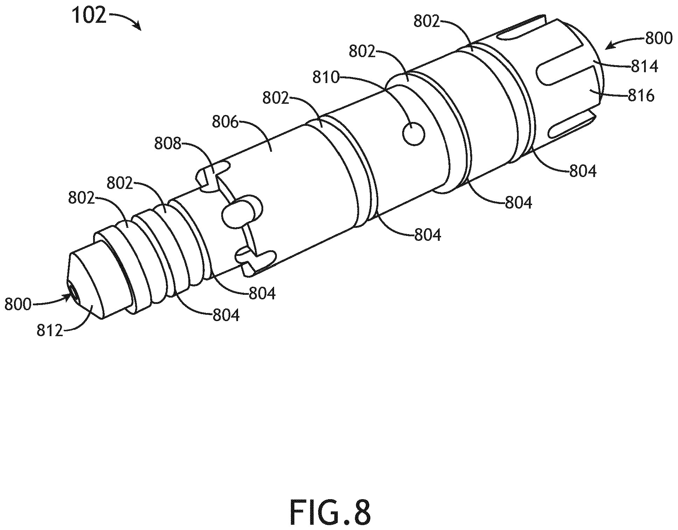

FIG. 8 illustrates the shuttle 102 of the multi-position shuttle valve assembly 100, in accordance with one or more embodiments of the disclosure.

The shuttle 102 may include a cavity or bore 800 running through the length of the shuttle 102. The shuttle 102 may include one or more seals 802 (e.g., O-rings, or the like) in corresponding grooves 804 in an exterior surface 806 of the shuttle 102. The one or more seals 802 and/or the corresponding grooves 804 may be different diameters. It is noted herein, however, that at least some of the one or more seals 802 and/or the corresponding grooves 804 may be a same or similar diameter.

The shuttle 102 may include one or more openings 808 configured to allow aeration of milk in an aerator configured to attach to the shuttle 102. The shuttle 102 may include one or more openings 810 leading to the cavity or bore 800.

The shuttle 102 may include one or more tapered surfaces or nozzles 812 at one end. The shuttle 102 may include one or more cut-away surfaces 814 at one end. The shuttle 102 may include one or more raised surfaces 816 at one end.

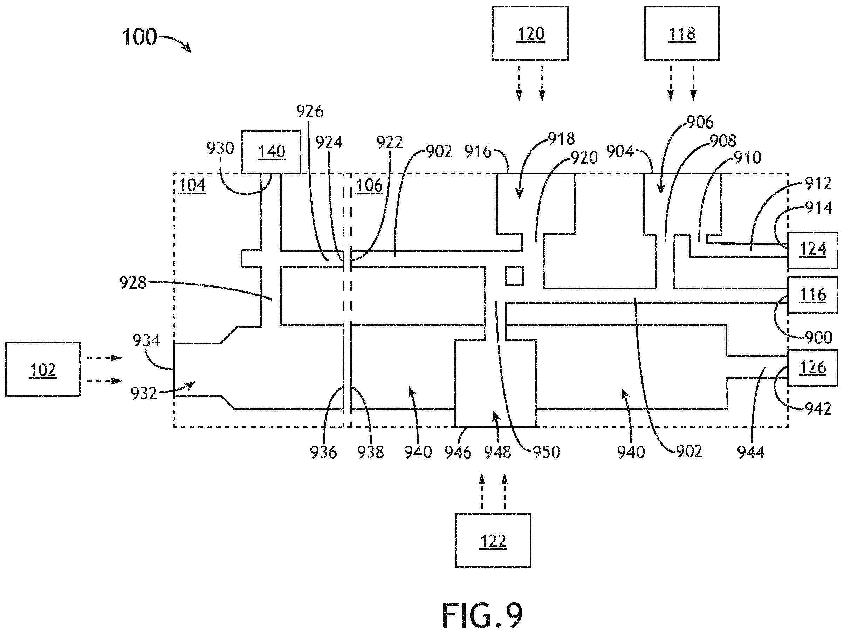

FIG. 9 is a block diagram of a portion of a froth subsystem through the front housing section 104 and the rear housing section 106 of the multi-position shuttle valve assembly 100, in accordance with one or more embodiments of the disclosure.

The froth subsystem may include one or more flow paths through the interior of the housing (e.g., internal flow paths or interior flow paths).

The rear housing section 106 may include an opening 900 leading to a flow path 902. The steam fitting 116 may be fluidically coupled to the opening 900.

The rear housing section 106 may include an opening 904 leading to a cavity or bore 906 defined by one or more interior surfaces of the rear housing section 106. The cavity or bore 906 may be configured to receive at least a portion of the solenoid valve 118 via the opening 904. The cavity or bore 906 may be fluidically coupled to the flow path 902 via a solenoid port 908. The cavity or bore 906 may include an opening 910 leading to a flow path 912, where the flow path 912 may lead to an opening 914. The solenoid valve outlet fitting 116 may be fluidically coupled to the opening 914. For example, fluid (e.g., steam) may flow from the flow path 902 and through the solenoid valve outlet fitting 116 when the solenoid valve 118 is open.

The rear housing section 106 may include an opening 916 leading to a cavity or bore 918 defined by one or more interior surfaces of the rear housing section 106. The cavity or bore 918 may be configured to receive one or more components of the counter-pressure valve assembly 120 via the opening 916 (e.g., may be a primary cavity or bore 918 and may be a primary counter-pressure valve assembly 120). For example, one or more components of the counter-pressure valve assembly 120 may be positioned within a flow path portion 920 of the flow path 902. Fluid (e.g., steam) may be allowed to flow from the steam fitting 116 and through the flow path portion 920 of the flow path 902 to an opening 922 when the counter-pressure valve assembly 120 is open, where the counter-pressure valve assembly 120 is configured to open when an amount of pressure exerted by the fluid on components of the counter-pressure valve assembly 120 exceeds a minimum amount of predetermined pressure.

The front housing section 104 may include an opening 924 leading to a flow path 926. The opening 922 of the rear housing section 106 may be proximate to the opening 924 of the front housing section 104.

The flow path 926 may lead to a flow path 928. The flow path 928 may be accessed via an opening 930. The fitting 140 may be coupled to the opening 930. The flow path 928 may lead to a cavity or bore 932 defined by one or more interior surfaces of the front housing section 104. The cavity or bore 932 may be accessed via an opening 934.

The cavity or bore 932 may be configured to receive at least a portion of the shuttle 102 via the opening 934 (e.g., is a shuttle cavity or bore 932). Fluid (e.g., steam) may be diverted from the flow path 928 to the cavity or bore 800 of the shuttle 102 (e.g., as illustrated in FIG. 8) when the shuttle 102 is in the open position.

The front housing section 104 may include an opening 936 leading from the cavity or bore 932. The rear housing section 106 may include an opening 938 leading to a cavity or bore 940 defined by one or more interior surfaces of the rear housing section 106. The opening 936 of the front housing section 104 may be proximate to the opening 938 of the rear housing section 106. The cavity or bore 940 may be configured to receive at least a portion of the shuttle 102 via the opening 938 after the portion of the shuttle 102 passes through the cavity or bore 932 of the front housing section 104.

The cavity or bore 940 may lead to an opening 942 via a flow path 944. The froth wand fitting 126 may be fluidically coupled to the opening 942. Fluid (e.g., steam) may be diverted from the flow path 928 to the froth wand fitting 126 via the cavity or bore 940 when the shuttle 102 is in the closed position.

It is noted herein that the dimensions of a combined cavity defined by the cavity or bore 932 and the cavity or bore 932 may be large compared to the dimensions of the shuttle 102 to allow for the combined cavity to act as a depository for scale buildup that either enters the valve housing or flakes off from the shuttle 102 during movement. In this regard, the multi-position shuttle valve assembly 102 may be of increased reliability in high-scale environments.

The rear housing section 106 may include an opening 946 leading to a cavity or bore 948 defined by one or more interior surfaces of the rear housing section 106.

The cavity or bore 948 may be configured to receive one or more components of the counter-pressure valve assembly 122 via the opening 946 (e.g., may be a secondary cavity or bore 948 and a secondary counter-pressure valve assembly 122). For example, one or more components of the counter-pressure valve assembly 122 may be positioned within a flow path portion 950 of the flow path 902. Fluid (e.g., a descale solution) may be allowed to flow from the shuttle 102 and through the flow path portion 950 of the flow path 902 to the steam fitting 116 when the counter-pressure valve assembly 122 is open, where the counter-pressure valve assembly 122 is configured to open when an amount of pressure exerted by the fluid on components of the counter-pressure valve assembly 122 exceeds a minimum amount of predetermined pressure.

It is noted herein that the orientations and/or the dimensions of the various openings, defined cavities, and flow paths illustrated in FIG. 9 are not intended to be limiting to the front housing section 104 and the rear housing section 106 of the multi-position shuttle valve assembly 100. In this regard, the various openings, defined cavities, and flow paths may include different dimensions and/or be differently oriented within the front housing section 104 and the rear housing section 106 of the multi-position shuttle valve assembly 100 than as illustrated in FIG. 9. Therefore, the above description should not be interpreted as a limitation on the disclosure but merely an illustration.

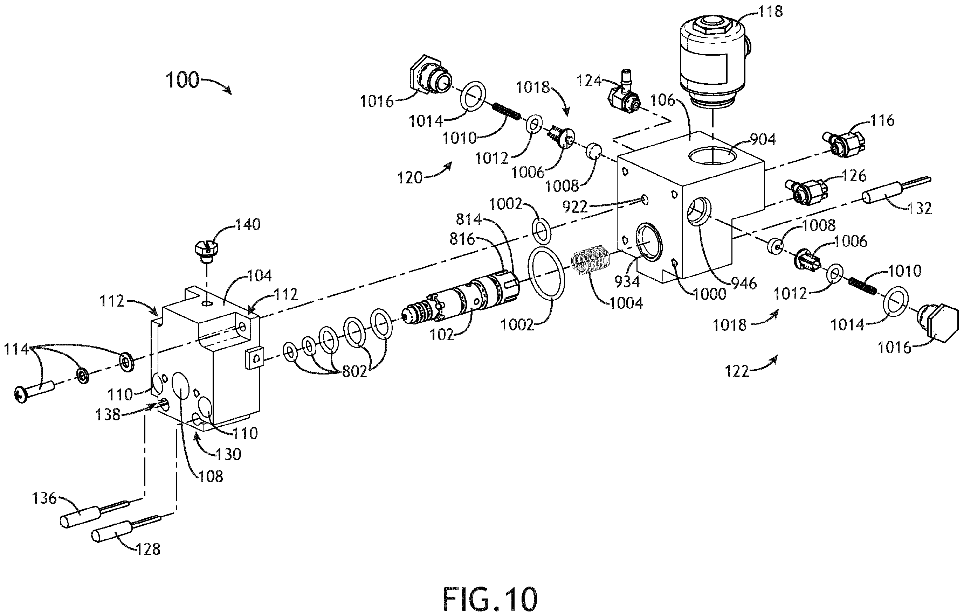

FIG. 10 is an exploded perspective view of the multi-position shuttle valve assembly 100, in accordance with one or more embodiments of the disclosure.

A front face of the rear housing section 106 may include the opening 934 configured to receive at least a portion of the shuttle 102.

The fastener hardware 114 may include, but is not limited to, one or more threaded fasteners, one or more lock washers, one or more flat washers, one or more seals (e.g., O-rings), or the like. Components of the fastener hardware 114 (e.g., the threaded fasteners) may pass through the front housing section 104 and engage one or more openings 1000.

One or more seals 1002 may be positioned between the front housing section 104 and the rear housing section 106 when the housing sections 104, 106 are coupled together with the fastener hardware 114. For example, the one or more seals 1002 may be positioned proximate to the opening 922, the opening 934, or another opening connecting flow paths and/or cavities or bores within the front housing section 104 and the rear housing section 106. The one or more seals 1002 may be different diameters. It is noted herein, however, that at least some of the one or more seals 1002 may be a same or similar diameter.

The movement of the shuttle 102 may be controlled in part by a spring 1004 (e.g., a wave spring, a compression spring, or the like). The spring 1004 may engage the one or more cut-away surfaces 814 and/or the one or more raised surfaces 816 of the shuttle 102. The spring 1004 may be configured to provide (e.g., generate and apply) a force against the shuttle 102. For example, the force may retain the shuttle 102 in the closed position absent another external force capable of moving the shuttle 102 to the open position. By way of another example, the force may return the shuttle 102 from the open position to the closed position following the removal of another external force capable of moving shuttle 102 to the open position. In this regard, the shuttle 102 is self-returning.

The counter-pressure valve assemblies 120, 122 may include a poppet 1006 with a tip 1008. For example, the tip 1008 may be a rubber tip coupled to the poppet 1006. By way of another example, the tip 1008 may be formed with the poppet 1006.

The counter-pressure valve assemblies 120, 122 may include a spring 1010 (e.g., a compression spring, a wave spring, or the like) configured to provide (e.g., generate and apply) a force against the poppet 1006 to retain the poppet 1006 in a closed position absent another external force (e.g., a force provided by steam, a force provided by a descale solution, or the like) capable of moving the poppet 1006 to an open position. For example, the poppet 1006 may be in a first position configured to block the flow path 902 when fluid (e.g., steam or descale fluid) having a first amount of fluid pressure engages the poppet 1006. By way of another example, the poppet 1006 may be in a section position configured to allow passage through flow path 902 when fluid (e.g., steam or descale fluid) having a second amount of fluid pressure engages the poppet 1006. It is noted herein the second amount of fluid pressure may be greater than the first amount of fluid pressure, such that the return force is countered and the poppet translates from the first position to the second position.

The counter-pressure valve assemblies 120, 122 may include one or more seals 1012 (e.g., O-rings) and/or one or more seals 1014 (e.g., O-rings) configured to engage an exterior surface of the poppet 1006 and one or more interior surfaces of a cut-out of the rear housing section 106. The one or more seals 1012, 1014 may be different diameters. It is noted herein, however, that at least some of the one or more seals 1012, 1014 may be a same or similar diameter.

The counter-pressure valve assemblies 120, 122 may include a cap 1016 that retains the spring 1010. One or more interior surfaces of the cap 1016 may define a cavity or bore that guides the poppet 1006 when it opens and closes. It is noted herein, however, that the cap 1016 may not be a component of the counter-pressure valve assemblies 120, 122, but instead may merely cover the one or more components of the counter-pressure valve assemblies 120, 122 or contain the one or more components of the counter-pressure valve assemblies 120, 122 within the rear housing section 106.

The counter-pressure valve assemblies 120, 122 may include a counter-pressure valve 1018. For example, the counter-pressure valve 1018 may include the poppet 1006, the tip 1008, and a seal 1012.

The counter-pressure valve 1018 of the counter-pressure valve assembly 120 may be positioned within the flow path portion 920 of the flow path 902 (e.g., as illustrated in FIG. 9). For example, fluid (e.g., steam) may be allowed to flow from the steam fitting 116 and through the flow path portion 920 of the flow path 902 to the opening 922 when the counter-pressure valve 1018 of the counter-pressure valve assembly 120 is open.

The counter-pressure valve 1018 of the counter-pressure valve assembly 122 may be positioned within the flow path portion 950 of the flow path 902. For example, fluid (e.g., a descale solution) may be allowed to flow from the shuttle 102 and through the flow path portion 950 of the flow path 902 to the steam fitting 116 when the counter-pressure valve 1018 of the counter-pressure valve assembly 122 is open.

It is noted herein that one or more components of the multi-position shuttle valve assembly 100 may be fabricated from a metal (e.g., a stainless steel) or a plastic (e.g., Radel, PEEK, or the like). For example, a plastic may be selected for fabrication due to the plastic being less susceptible to scale adherence and buildup compared to stainless steel. It is noted herein, however, that the metal (or any material) may be coated in a non-stick material to reduce susceptibility to scaling.

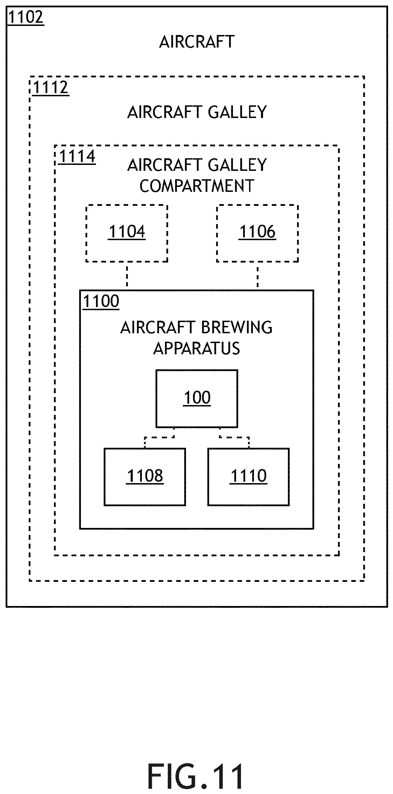

FIG. 11 is a block diagram illustrating an aircraft 1102 with the aircraft brewing apparatus 1100 including the multi-position shuttle valve assembly 100, in accordance with one or more embodiments of the disclosure.

Generally, the aircraft brewing apparatus 1100 may house one or more components of a brewing system. For example, the brewing system may include one or more heating subsystems with any number of heating components known in the art (e.g., one or more heating elements, one or more heat-resistant components, or the like). By way of another example, the brewing system may include one or more plumbing subsystems with any number of plumbing components known in the art (e.g., fluidic components including one or more pipes and pipe couplers, one or more tubes and tube couplers, or the like). By way of another example, the brewing system may include one or more electrical subsystems with any number of electrical components known in the art (e.g., one or more wire harnesses, one or more terminal blocks, one or more sensors, or the like). By way of another example, the brewing system may include one or more froth subsystems. It is noted herein the various systems and subsystems within the aircraft brewing apparatus 1100 may share any number of components.

The multi-position shuttle valve assembly 100 may be configured to allow steam to be diverted to either a froth wand 1104 or a froth module or device 1106 (e.g., components of the froth subsystem) based on whether the froth module or device 1106 is coupled to the aircraft brewing apparatus 1100.

For example, the multi-position shuttle valve assembly 100 may be configured to divert steam from a froth heater 1108 to the froth wand 1104 (e.g., components of the froth subsystem) for frothing milk in a decanter when the shuttle 102 is in a closed position. When the froth module or device 1106 is not coupled proximate to the front housing section 104, the shuttle 102 is in the closed position, diverting steam to the froth wand 1104.

By way of another example, the multi-position shuttle valve assembly 100 may be configured to divert steam from the froth heater 1108 to the froth module or device 1106 (e.g., components of the froth subsystem) for creating froth for a cappuccino when the shuttle 102 is in an open position. The froth module or device 1106 may be installed on the housing (e.g., proximate to the front housing section 104), pushing on the shuttle 102 from the closed position to the open position and diverting steam from the froth wand 1104 to the froth module or device 1106.

In this regard, the shuttle 102 may be configured to translate from a first position (e.g., the closed position) to a second position (e.g., an open position) following an application of a force by the froth module or device 1106 on the shuttle 102 when the froth module or device 1106 is installed on the housing. In addition, the shuttle 102 may be configured to translate from the second position to the first position when the froth module or device 1106 is removed from the housing, where the translation of the shuttle 102 may be dependent on the return force provided on the shuttle 102 by the spring 1004.

It is noted herein that where the multi-position shuttle valve assembly 100 includes multiple reed switches, the reed switch 128 may be configured to detect or indicate the coupling (or uncoupling) of the froth module or device 1106 to the housing of the multi-position shuttle valve assembly 100. In addition, it is noted herein that where the multi-position shuttle valve assembly 100 includes multiple reed switches, the reed switch 132 may be configured to detect or indicate the position of the shuttle 102 within the cavity or bore 932 (e.g., configured to detect or indicate whether the shuttle 102 is in the closed position or open position (either temporarily positioned or stuck)). In one instance, where the shuttle 102 is in the open position and the froth module or device 1106 is not detected, the aircraft brewing apparatus 1100 will not allow a froth cycle to be completed to ensure steam does not exit the multi-position shuttle valve assembly 100 towards a user.

It is noted herein, however, that the multi-position shuttle valve assembly 100 may not require the one or more sensors (e.g., the one or more reed switches 128 and/or 132), and instead be fully mechanical by relying only on the displacement of the shuttle 102 from the closed position to the open position caused by the coupling of the froth module or device 1106 to the multi-position shuttle valve assembly 100, thus decreasing a likelihood of failure due to bad sensor. Therefore, the above description should not be interpreted as a limitation on the disclosure but merely an illustration.

When the electro-mechanical solenoid valve 118 is closed and the counter-pressure valve assembly 120 is open, the steam may be able to enter the multi-position shuttle valve assembly 100 from the froth heater 1108, pass by the shuttle 102 in the open position, and exit through to the froth wand 1104 via the froth wand fitting 126 during the froth cycle. With respect to the counter-pressure valve assembly 120, the force exerted by the spring 1010 may keep the poppet 1006 in a seated position (e.g., closed) until a minimum amount of predetermined pressure is exerted by the steam on the poppet tip 1008. When an amount of pressure exerted by the steam on the poppet tip 1008 exceeds the minimum amount of predetermined pressure, the poppet 1006 may travel from the seated position to an unseated position. The steam may then continue to flow to the shuttle 102 and ultimately exit through the froth wand 1104. When the froth cycle is complete and the froth subsystem is no longer pressurized, the poppet 1006 may return to the seated position and the counter-pressure valve assembly 120 may close (and the electro-mechanical solenoid valve 118 may open).

When the electro-mechanical solenoid valve 118 is closed, the counter-pressure valve assembly 120 is open, and the froth module or device 1106 is coupled to the multi-position shuttle valve assembly 100, the steam may be able to enter the multi-position shuttle valve assembly 100 from the froth heater 1108, pass through the shuttle 102 in the open position, and exit through the froth module or device 1106 via the shuttle 102 during the froth cycle. With respect to the counter-pressure valve assembly 120, the force exerted by the spring 1010 may keep the poppet 1006 in a seated position (e.g., closed) until a minimum amount of predetermined pressure is exerted by the steam on the poppet tip 1008. When an amount of pressure exerted by the steam on the poppet tip 1008 exceeds the minimum amount of predetermined pressure, the poppet 1006 may travel from the seated position to an unseated position. The steam may then continue to flow to the shuttle 102 and ultimately exit through the froth module or device 1106. When the froth cycle is complete and the froth subsystem is no longer pressurized, the poppet 1006 may return to the seated position and the counter-pressure valve assembly 120 may close (and the electro-mechanical solenoid valve 118 may open).

When the electro-mechanical solenoid valve 118 is open and the counter-pressure valve assemblies 120, 122 are closed, the steam may be able to travel through the electro-mechanical solenoid valve 118, out of the multi-position valve assembly 100 via the solenoid valve outlet fitting 124, and into a fluid tank 1110. When combined with the counter-pressure valve assemblies 120, 122, excess steam flow is reduced or eliminated from exiting the froth wand 1104 or the froth module or device 1106 when the froth cycle is complete. In this regard, the aircraft brewing apparatus 1100 may be configured to vent to atmospheric pressure and relieve pressure in the froth subsystem.

In this regard, the multi-position shuttle valve assembly 100 may reduce or eliminate the need for electro-mechanical solenoid valves to be utilized downstream of the froth heater 1108 to control the flow of steam to either the froth wand 1104 or froth module or device 1106. It is noted herein that not requiring the downstream electro-mechanical solenoid valves may remove a source of possible failure resulting in an inoperable unit, leaks in the system, or the like, the possible failure including, but not limited to, scale deposits forming on the electro-mechanical solenoid valves.

The aircraft 1102 may include an aircraft galley 1112, in which the brewing apparatus 1100 including the multi-position shuttle valve assembly 100 may be installed and/or configured or dimensioned to fit. The aircraft galley 1112 may include an aircraft galley compartment 1114, in which the brewing apparatus 1100 including the multi-position shuttle valve assembly 100 may be installed and/or configured or dimensioned to fit. An aircraft water supply from which the fluid tank 1110 receives water may be installed and/or configured or dimensioned to fit within any of the aircraft 1102, the aircraft galley 1112, and/or the aircraft galley compartment 1114. A waste water reservoir into which the aircraft brewing apparatus 1100 empties may be installed and/or configured or dimensioned to fit within any of the aircraft 1102, the aircraft galley 1112, and/or the aircraft galley compartment 1114.

Although embodiments of the disclosure are directed to the brewing apparatus 1100 including the multi-position shuttle valve assembly 100 being installed and/or configured or dimensioned to fit within an aircraft 1102, it is noted herein that the brewing apparatus 1100 including the multi-position shuttle valve assembly 100 may instead be installed and/or configured or dimensioned to fit within any type of vehicle known in the art. For example, the vehicle may be any air, land, or water-based personal equipment or vehicle; any air, land, or water-based commercial equipment or vehicle; any air, land, or water-based military equipment or vehicle known in the art. In addition, it is noted herein the brewing apparatus 1100 may be a standalone device configured to operate within a home or a business. For example, the brewing apparatus 1100 may be a device sold for commercial or industrial use in either a home or a business. In this regard, the brewing apparatus 1100 may not be installed and/or configured or dimensioned to fit within the aircraft 1102. Therefore, the above description should not be interpreted as a limitation on the disclosure but merely an illustration.

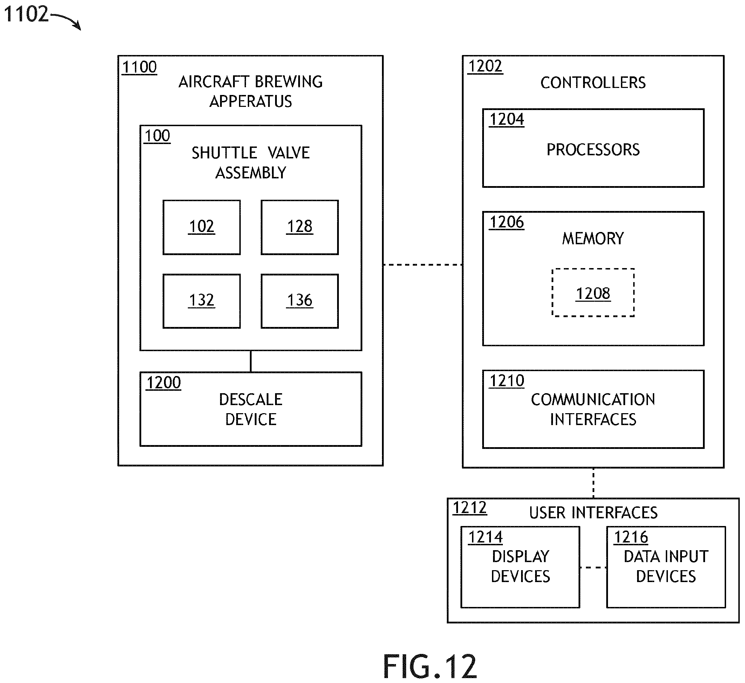

FIG. 12 is a block diagram illustrating the aircraft 1102 with the brewing apparatus 1100 including the multi-position shuttle valve assembly 100, in accordance with one or more embodiments of the disclosure.

A descale module or device 1200 may be configured to engage the aircraft brewing apparatus 1100. For example, the descale module or device 1200 may be installed on the housing of the multi-position shuttle valve assembly 100 proximate to the shuttle 102. By way of another example, the descale module or device 1200 may be coupled directly to the shuttle 102. The descale module or device 1200 may flow a descale solution between the descale module or device 1200 and the froth heater 1108 through the multi-position shuttle valve assembly 100.

It is noted herein that where the multi-position shuttle valve assembly 100 includes multiple reed switches, the reed switch 136 may be configured to detect the coupling (or uncoupling) of the descale module or device 1200, which may allow for a descale cycle to start.

When the electro-mechanical solenoid valve 118 and the counter-pressure valve assembly 120 are closed, the counter-pressure valve assembly 122 is open, and the descale module or device 1200 is coupled to the multi-position shuttle valve assembly 100, the descale solution may be able to enter the multi-position shuttle valve assembly 100, pass through the shuttle 102 in the open position, exit the multi-position shuttle valve assembly 100 into the froth heater 1108, and pass into the internal water storage tank to descale the multi-position shuttle valve assembly 100. With respect to the counter-pressure valve assembly 122, the force exerted by the spring 1010 may keep the poppet 1006 in a seated position (e.g., closed) until a minimum amount of predetermined pressure is exerted by the descale solution on the poppet tip 1008. When an amount of pressure exerted by the descale solution on the poppet tip 1008 exceeds the minimum amount of predetermined pressure, the poppet 1006 may travel from the seated position to an unseated position. The descale solution may then continue to flow to the froth heater 1108 and ultimately enter the water storage tank. When the descale cycle is complete, the descale module or device 1200 is no longer coupled to the aircraft brewing apparatus 1100 proximate to the shuttle 102, and the froth subsystem is no longer pressurized, the poppet 1006 may return to the seated position, the counter-pressure valve assembly 122 may close, and the electro-mechanical solenoid valve 118 may open.

The brewing apparatus 1100 may be coupled to one or more controllers 1202. The one or more controllers 1202 may be housed within the aircraft 1102. The one or more controllers 1202 may be communicatively coupled with an onboard galley network controller of the aircraft 1102 (although not shown). For example, the one or more controllers 1202 may be configured to transmit data to and/or receive data from the onboard galley network controller of the aircraft 1102. By way of another example, the one or more controllers 1202 may be configured to record event logs and may transmit the event logs to the onboard galley network controller of the aircraft 1102. By way of another example, the one or more controllers 1202 may be configured to receive information and/or commands from the onboard galley network controller of the aircraft 1102, either in response to or independent of transmitted event logs.

The one or more controllers 1202 may be communicatively coupled with an offboard ground maintenance crew controller (although not shown). For example, the one or more controllers 1202 may be configured to transmit data to and/or receive data from the offboard ground maintenance crew controller. By way of another example, the one or more controllers 1202 may be configured to record event logs and may transmit the event logs to the offboard ground maintenance crew controller. By way of another example, the one or more controllers 1202 may be configured to receive information and/or commands from the offboard ground maintenance crew controller, either in response to or independent of transmitted event logs.

The one or more controllers 1202 may include at least one of one or more processors 1204, memory 1206 configured to store one or more sets of program instructions 1208, and/or one or more communication interfaces 1210.

The one or more controllers 1202 may be communicatively coupled to one or more user interfaces 1212. The one or more user interfaces 1212 may include and/or be configured to interact with one or more display devices 1214. The one or more user interfaces 1212 may include and/or be configured to interact with one or more data input devices 1216.

The one or more processors 1204 provides processing functionality for at least the one or more controllers 1202 and may include any number of processors, micro-controllers, circuitry, field programmable gate array (FPGA) or other processing systems, and resident or external memory for storing data, executable code, and other information accessed or generated by the one or more controllers 1202. The one or more processors 1204 may execute one or more software programs (e.g., the one or more sets of program instructions 1208) embodied in a non-transitory computer readable medium (e.g., the memory 1206) that implement techniques described herein. The one or more processors 1204 are not limited by the materials from which it is formed or the processing mechanisms employed therein and, as such, may be implemented via semiconductor(s) and/or transistors (e.g., using electronic integrated circuit (IC) components), and so forth.

The memory 1206 may be an example of tangible, computer-readable storage medium that provides storage functionality to store various data and/or program code associated with operation of the one or more controllers 1202 and/or one or more processors 1204, such as software programs and/or code segments, or other data to instruct the one or more processors 1204 and/or other components of the one or more controllers 1202, to perform the functionality described herein. Thus, the memory 1206 may store data, such as a program of instructions for operating the one or more controllers 1202, including its components (e.g., one or more processors 1204, the one or more communication interfaces 1210, or the like), and so forth. It should be noted that while a single memory 1206 is described, a wide variety of types and combinations of memory (e.g., tangible, non-transitory memory) may be employed. The memory 1206 may be integral with the one or more processors 1204, may include stand-alone memory, or may be a combination of both. Some examples of the memory 1206 may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The one or more controllers 1202 may be configured to perform one or more process steps, as defined by the one or more sets of program instructions 1208. The one or more process steps may be performed iteratively, concurrently, and/or sequentially. The one or more sets of program instructions 1208 may be configured to operate via a control algorithm, a neural network (e.g., with states represented as nodes and hidden nodes and transitioning between them until an output is reached via branch metrics), a kernel-based classification method, a Support Vector Machine (SVM) approach, canonical-correlation analysis (CCA), factor analysis, flexible discriminant analysis (FDA), principal component analysis (PCA), multidimensional scaling (MDS), principal component regression (PCR), projection pursuit, data mining, prediction-making, exploratory data analysis, supervised learning analysis, boolean logic (e.g., resulting in an output of a complete truth or complete false value), fuzzy logic (e.g., resulting in an output of one or more partial truth values instead of a complete truth or complete false value), or the like. For example, in the case of a control algorithm, the one or more sets of program instructions 1208 may be configured to operate via proportional control, feedback control, feedforward control, integral control, proportional-derivative (PD) control, proportional-integral (PI) control, proportional-integral-derivative (PID) control, or the like.

The one or more communication interfaces 1210 may be operatively configured to communicate with components of the one or more controllers 1202. For example, the one or more communication interfaces 1210 may be configured to retrieve data from the one or more processors 1204 or other devices, transmit data for storage in the memory 1206, retrieve data from storage in the memory 1206, and so forth. The one or more communication interfaces 1210 may also be communicatively coupled with the one or more processors 1204 to facilitate data transfer between components of the one or more controllers 1202 and the one or more processors 1204. It should be noted that while the one or more communication interfaces 1210 is described as a component of the one or more controllers 1202, one or more components of the one or more communication interfaces 1210 may be implemented as external components communicatively coupled to the one or more controllers 1202 via a wired and/or wireless connection. The one or more controllers 1202 may also include and/or connect to one or more input/output (I/O) devices. In embodiments, the one or more communication interfaces 1210 includes or is coupled to a transmitter, receiver, transceiver, physical connection interface, or any combination thereof.

The one or more communication interfaces 1210 may be operatively configured to communicate with the one or more user interfaces 1212. The one or more controllers 1202 and the one or more user interfaces 1212 may be separate components (e.g., have separate housings and/or separate chassis). It is noted herein, however, that the one or more controllers 1202 and the one or more user interfaces 1212 may be components integrated in a single housing and/or on a single chassis.

The one or more display devices 1214 may include any display device known in the art. For example, the one or more display devices 1214 may include, but are not limited to, a liquid crystal display (LCD), a light-emitting diode (LED) display, an organic light-emitting diode (OLED) based display, or the like. Those skilled in the art should recognize that a variety of display devices may be suitable for implementation in the disclosure and the particular choice of display device may depend on a variety of factors, including, but not limited to, form factor, cost, and the like. In a general sense, any display device 1214 capable of integration with the one or more data input devices 1216 (e.g., touchscreen, bezel mounted interface, keyboard, mouse, trackpad, and the like) is suitable for implementation in the disclosure.

The one or more data input devices 1216 may include any data input device known in the art. For example, the one or more data input devices 1216 may include, but are not limited to, a keyboard, a keypad, a touchscreen, a lever, a knob, a scroll wheel, a track ball, a switch, a dial, a sliding bar, a scroll bar, a slide, a touch pad, a paddle, a steering wheel, a joystick, a button, a bezel input device or the like. In the case of a touchscreen interface, those skilled in the art should recognize that a large number of touchscreen interfaces may be suitable for implementation in the disclosure. For instance, a display device 1214 may be integrated with a touchscreen interface, such as, but not limited to, a capacitive touchscreen, a resistive touchscreen, a surface acoustic based touchscreen, an infrared based touchscreen, or the like. In a general sense, any touchscreen interface capable of integration with the display portion of a display device 1214 is suitable for implementation in the disclosure.

It is noted herein the brewing apparatus 1100, the one or more controllers 1202, and/or the one or more user interfaces 1212 (and/or select components of the brewing apparatus 1100, the one or more controllers 1202, and/or the one or more user interfaces 1212) may be configured in accordance with guidelines and/or standards put forth by, but not limited to, the Federal Aviation Administration (FAA), the European Aviation Safety Agency (EASA) or any other flight certification agency or organization; the American National Standards Institute (ANSI), Aeronautical Radio, Incorporated (ARINC), or any other standards setting organization or company; the Radio Technical Commission for Aeronautics (RTCA) or any other guidelines agency or organization; or the like. However, it is noted herein that the brewing apparatus 1100 may not be required to meet any regulations or design definitions. Therefore, the above description should not be interpreted as a limitation on the disclosure but merely an illustration.

It is noted herein that the one or more controllers 1202 may be coupled to one or more motors or actuators that are not exposed to the froth subsystem, where the one or more motors or actuators are configured to act upon the shuttle 102 and/or the poppet 1006. For example, the one or more motors or actuators may be configured to cause the shuttle 102 and/or the poppet 1006 to move between a closed position and an open position. For instance, the one or more controllers 1202 may receive a signal from the one or more sensors of the multi-position shuttle valve assembly 100 that the froth module or device 1106 is coupled to and/or otherwise interacting with the multi-position shuttle valve assembly 100, which may cause the shuttle 102 to be translated. In addition, the one or more controllers 1202 may receive a signal from the one or more sensors of the multi-position shuttle valve assembly 100 that a fluid (e.g., steam or a descale fluid) is flowing through the flow paths of the multi-position shuttle valve assembly 100, which may cause the poppet 1006 to be translated.

Although embodiments of the present disclosure are directed to the one or more controllers 1202 being coupled to the brewing apparatus 1100 including the multi-position shuttle valve assembly 100 (e.g., coupled to the one or more sensors of the multi-position shuttle valve assembly 100), it is noted herein that the multi-position shuttle valve assembly 100 is fully mechanical. In this regard, the multi-position shuttle valve assembly 100 does not require input or control from the one or more controllers 1202 to switch the shuttle 102 between a first position (e.g., where the multi-position shuttle valve assembly 100 may be configured to divert steam from a froth heater 1108 to the froth wand 1104 when the shuttle 102 is in the closed position) and a second position (e.g., where the multi-position shuttle valve assembly 100 may be configured to divert steam from the froth heater 1108 to the froth module or device 1106 when the shuttle 102 is in the open position) when the froth module or device 1106 is coupled to and/or otherwise interacts with the multi-position shuttle valve assembly 100. In addition, the multi-position shuttle valve assembly 100 may be reduce the electrical load required to operate the multi-position shuttle valve assembly 100, allowing the power to be utilized elsewhere (e.g., within the aircraft brewing apparatus 1100, within the aircraft 1102, or the like). Therefore, the above description should not be interpreted as a limitation on the disclosure but merely an illustration.

## Claims

1. A multi-position shuttle valve assembly (100), comprising:
a housing (104,106) comprising at least one flow path, the at least one flow path configured to receive steam from a froth heater (1108) of an aircraft brewing apparatus;
a froth wand fitting (126); and
a shuttle (102), a first portion of the shuttle configured to extrude from a front surface of the housing, a second portion of the shuttle configured to fit within a shuttle cavity defined by one or more interior surfaces of the housing,
the at least one flow path configured to direct the steam to the defined cavity,
the shuttle configured to divert the steam to the froth wand fitting when the shuttle is in a first position,
the shuttle configured to divert the steam via the first portion of the shuttle to a froth module when a froth module is installed on the housing when the shuttle is in a second position,
a translation of the shuttle between the first position and the second position being dependent on the froth module being installed on the housing.

2. The multi-position shuttle valve assembly of Claim 1, the shuttle configured to translate from the first position to the second position following a providing of a force by the froth module on the shuttle when the froth module is installed on the housing.

3. The multi-position shuttle valve assembly of Claim 1 or 2, further comprising:
a spring configured to provide a return force on the shuttle,
the shuttle configured to translate from the second position to the first position when the froth module is removed from the housing, the translation of the shuttle being dependent on the return force provided by the spring.

4. The multi-position shuttle valve assembly of any preceding claim, further comprising:
an electro-mechanical solenoid valve in fluid communication with the at least one flow path,
the electro-mechanical solenoid valve configured to drain the steam from the at least one flow path into a fluid tank of the aircraft brewing apparatus when open,
the electro-mechanical solenoid valve configured to allow the steam to pass through the at least one flow path when closed.

5. The multi-position shuttle valve assembly of any preceding claim, further comprising:
a counter-pressure valve assembly configured to fit within a cavity defined by one or more interior surfaces of the housing, the defined cavity in fluid communication with the at least one flow path, the counter-pressure valve assembly comprising:
a poppet; and
a spring configured to provide a return force to the poppet,
the poppet being in a first position configured to block the at least one flow path when steam having a first amount of steam pressure engages the poppet,
the poppet being in a second position configured to allow passage through the at least one flow path when steam having a second amount of steam pressure engages the poppet.

6. The multi-position shuttle valve assembly of Claim 5, the first amount of steam pressure being less than the return force provided by the spring and the second amount of steam pressure being greater than the return force provided by the spring.

7. The multi-position shuttle valve assembly of any preceding claim, being configured to receive a descale module, the descale module configured to provide the multi-position shuttle valve assembly with a descale fluid, the descale fluid configured to flow through the at least one flow path and the shuttle cavity.

8. The multi-position shuttle valve assembly of Claim 7, further comprising:
a counter-pressure valve assembly configured to fit within a cavity defined by one or more interior surfaces of the housing, the defined cavity being in fluid communication with the at least one flow path, the counter-pressure valve assembly comprising:
a poppet; and
a spring configured to provide a return force to the poppet,
the poppet being in a first position configured to block the at least one flow path when descale fluid having a first amount of fluid pressure engages the poppet,
the poppet being in a second position configured to allow passage through the at least one flow path when descale fluid having a second amount of fluid pressure engages the poppet.

9. The multi-position shuttle valve assembly of Claim 8, the first amount of fluid pressure being less than the return force provided by the spring and the second amount of fluid pressure being greater than the return force provided by the spring.

10. The multi-position shuttle valve assembly of Claim 7, 8, or 9, further comprising a reed switch configured to detect an installation of the descale module.

11. The multi-position shuttle valve assembly of any preceding claim, further comprising a reed switch configured to detect the position of the shuttle within the shuttle cavity.

12. The multi-position shuttle valve assembly of any preceding claim, further comprising a reed switch configured to detect an installation of a froth module on the housing.

13. The multi-position shuttle valve assembly of any preceding claim, the housing comprising a front housing section and a rear housing section, the front surface of the housing being a front surface of the front housing section, a first portion of the shuttle cavity defined by one or more interior surfaces of the front housing section and a second portion of the shuttle cavity defined by one or more interior surfaces of the rear housing section.

14. The multi-position shuttle valve assembly of any preceding claim, the aircraft brewing apparatus being installable within an aircraft galley of an aircraft.

15. An aircraft brewing apparatus, comprising:
a froth heater (1108);
a froth wand (1104); and
the multi-position shuttle valve assembly according to any preceding claim, wherein the at least one flow path is configured to receive steam from the froth heater.

## Patentansprüche

1. Mehrpositionen-Wechselventilanordnung (100), umfassend:
ein Gehäuse (104, 106), das zumindest einen Strömungsweg umfasst, wobei der zumindest eine Strömungsweg konfiguriert ist, um Dampf von einem Schaumerhitzer (1108) einer Luftfahrzeugbrühvorrichtung aufzunehmen;
eine Aufschäumeranbringung (126); und
einen Wechsler (102), wobei ein erster Teil des Wechslers konfiguriert ist, um von einer vorderen Oberfläche des Gehäuses auszustoßen, wobei ein zweiter Teil des Wechslers konfiguriert ist, um in einen Wechslerhohlraum zu passen, der durch eine oder mehrere innere Oberflächen des Gehäuses definiert ist,
wobei der zumindest eine Strömungsweg konfiguriert ist, um den Dampf zu dem definierten Hohlraum zu lenken,
wobei der Wechsler konfiguriert ist, um den Dampf zu der Aufschäumeranbringung abzulenken, wenn der Wechsler in einer ersten Position ist,
wobei der Wechsler konfiguriert ist, um den Dampf über den ersten Teil des Wechslers zu einem Schaummodul abzulenken, wenn ein Schaummodul an dem Gehäuse installiert ist, wenn der Wechsler in einer zweiten Position ist,
wobei ein Übergang des Wechslers zwischen der ersten Position und der zweiten Position davon abhängt, ob das Schaummodul an dem Gehäuse installiert ist.

2. Mehrpositionen-Wechselventilanordnung nach Anspruch 1, wobei der Wechsler konfiguriert ist, um nach einer Bereitstellung einer Kraft durch das Schaummodul auf den Wechsler, wenn das Schaummodul an dem Gehäuse installiert ist, von der ersten Position zu der zweiten Position überzugehen.

3. Mehrpositionen-Wechselventilanordnung nach Anspruch 1 oder 2, ferner umfassend:
eine Feder, die konfiguriert ist, um eine Rückstellkraft auf dem Wechsler bereitzustellen,
wobei der Wechsler konfiguriert ist, um von der zweiten Position zu der ersten Position überzugehen, wenn das Schaummodul von dem Gehäuse entfernt ist, wobei der Übergang des Wechslers von der Rückstellkraft abhängt, die durch die Feder bereitgestellt wird.

4. Mehrpositionen-Wechselventilanordnung nach einem vorhergehenden Anspruch, ferner umfassend:
ein elektromechanisches Solenoidventil in Fluidkommunikation mit dem zumindest einen Strömungsweg,
wobei das elektromechanische Solenoidventil konfiguriert ist, um den Dampf von dem zumindest einen Strömungsweg in einen Fluiddank der Luftfahrzeugbrühvorrichtung abzulassen, wenn es offen ist,
wobei das elektromechanische Solenoidventil konfiguriert ist, um zu ermöglichen, dass der Dampf durch den zumindest einen Strömungsweg geht, wenn es geschlossen ist.

5. Mehrpositionen-Wechselventilanordnung nach einem vorhergehenden Anspruch, ferner umfassend:
eine Gegendruckventilanordnung, die konfiguriert ist, um in einen Hohlraum zu passen, der durch eine oder mehrere innere Oberflächen des Gehäuses definiert ist, wobei der definierte Hohlraum in Fluidkommunikation mit dem zumindest einen Strömungsweg ist, wobei die Gegendruckventilanordnung Folgendes umfasst:
ein Tellerventil; und
eine Feder, die konfiguriert ist, um dem Tellerventil eine Rückstellkraft bereitzustellen,
wobei das Tellerventil in einer ersten Position konfiguriert ist, um den zumindest einen Strömungsweg zu blockieren, wenn Dampf, der eine erste Menge an Dampfdruck aufweist, das Tellerventil in Eingriff nimmt,
wobei das Tellerventil in einer zweiten Position konfiguriert ist, um Durchlass durch den zumindest einen Strömungsweg zu ermöglichen, wenn Dampf, der eine zweite Menge an Dampfdruck aufweist, das Tellerventil in Eingriff nimmt.

6. Mehrpositionen-Wechselventilanordnung nach Anspruch 5, wobei die erste Menge an Dampfdruck weniger als die Rückstellkraft ist, die durch die Feder bereitgestellt ist, und die zweite Menge an Dampfdruck größer als die Rückstellkraft ist, die durch die Feder bereitgestellt ist.

7. Mehrpositionen-Wechselventilanordnung nach einem vorhergehenden Anspruch, die konfiguriert ist, um ein Entkalkungsmodul aufzunehmen, wobei das Entkalkungsmodul konfiguriert ist, um der Mehrpositionen-Wechselventilanordnung ein Entkalkungsfluid bereitzustellen, wobei das Entkalkungsfluid konfiguriert ist, um durch den zumindest einen Strömungsweg und den Wechslerhohlraum zu strömen.

8. Mehrpositionen-Wechselventilanordnung nach Anspruch 7, ferner umfassend:
eine Gegendruckventilanordnung, die konfiguriert ist, um in einen Hohlraum zu passen, der durch eine oder mehrere innere Oberflächen des Gehäuses definiert ist, wobei der definierte Hohlraum in Fluidkommunikation mit dem zumindest einen Strömungsweg ist, wobei die Gegendruckventilanordnung Folgendes umfasst:
ein Tellerventil; und
eine Feder, die konfiguriert ist, um dem Tellerventil eine Rückstellkraft bereitzustellen,
wobei das Tellerventil in einer ersten Position konfiguriert ist, um den zumindest einen Strömungsweg zu blockieren, wenn Entkalkungsfluid, das eine erste Menge an Fluiddruck aufweist, das Tellerventil in Eingriff nimmt,
wobei das Tellerventil in einer zweiten Position konfiguriert ist, um Durchlass durch den zumindest einen Strömungsweg zu ermöglichen, wenn Entkalkungsfluid, das eine zweite Menge an Fluiddruck aufweist, das Tellerventil in Eingriff nimmt.

9. Mehrpositionen-Wechselventilanordnung nach Anspruch 8, wobei die erste Menge an Fluiddruck weniger als die Rückstellkraft ist, die durch die Feder bereitgestellt ist, und die zweite Menge an Fluiddruck größer als die Rückstellkraft ist, die durch die Feder bereitgestellt ist.

10. Mehrpositionen-Wechselventilanordnung nach Anspruch 7, 8 oder 9, ferner umfassend einen Reed-Schalter, der konfiguriert ist, um eine Installation des Entkalkungsmoduls zu erfassen.

11. Mehrpositionen-Wechselventilanordnung nach einem vorhergehenden Anspruch, ferner umfassend einen Reed-Schalter, der konfiguriert ist, um die Position des Wechslers innerhalb des Wechslerhohlraums zu erfassen.

12. Mehrpositionen-Wechselventilanordnung nach einem vorhergehenden Anspruch, ferner umfassend einen Reed-Schalter, der konfiguriert ist, um eine Installation eines Schaummoduls an dem Gehäuse zu erfassen.

13. Mehrpositionen-Wechselventilanordnung nach einem vorhergehenden Anspruch, wobei das Gehäuse einen vorderen Gehäuseabschnitt und einen hinteren Gehäuseabschnitt umfasst, wobei die vordere Oberfläche des Gehäuses eine vordere Oberfläche des vorderen Gehäuseabschnittes ist, wobei ein erster Teil des Wechslerhohlraums durch eine oder mehrere innere Oberflächen des vorderen Gehäuseabschnittes definiert ist und ein zweiter Teil des Wechslerhohlraums durch eine oder mehrere innere Oberflächen des hinteren Gehäuseabschnittes definiert ist.

14. Mehrpositionen-Wechselventilanordnung nach einem vorhergehenden Anspruch, wobei die Luftfahrzeugbrühvorrichtung innerhalb einer Luftfahrzeugkombüse eines Luftfahrzeugs installierbar ist.

15. Luftfahrzeugbrühvorrichtung, umfassend:
einen Schaumerhitzer (1108);
einen Aufschäumer (1104); und
die Mehrpositionen-Wechselventilanordnung nach einem vorhergehenden Anspruch, wobei der zumindest eine Strömungsweg konfiguriert ist, um Dampf von dem Schaumerhitzer aufzunehmen.

## Revendications

1. Ensemble de clapet-navette multi-positions (100), comprenant :
un logement (104, 106) comprenant au moins un trajet d'écoulement, le au moins un trajet d'écoulement étant configuré pour recevoir de la vapeur d'un réchauffeur de mousse (1108) d'un appareil d'infusion d'aéronef ;
un raccord de buse à mousse (126) ; et
une navette (102), une première partie de la navette étant configurée pour sortir d'une surface avant du logement, une seconde partie de la navette étant configurée pour rentrer à l'intérieur d'une cavité de navette définie par une ou plusieurs surfaces intérieures du logement,
le au moins un trajet d'écoulement étant configuré pour diriger la vapeur vers la cavité définie,
la navette étant configurée pour dévier la vapeur vers le raccord de buse à mousse lorsque la navette est dans une première position,
la navette étant configurée pour dévier la vapeur via la première partie de la navette vers un module de mousse lorsqu'un module de mousse est installé sur le logement lorsque la navette est dans une seconde position,
une translation de la navette entre la première position et la seconde position étant dépendante du module de mousse installé sur le logement.

2. Ensemble de clapet-navette multi-positions selon la revendication 1, la navette étant configurée pour se translater depuis la première position vers la seconde position suite à la fourniture d'une force par le module de mousse sur la navette lorsque le module de mousse est installé sur le logement.

3. Ensemble de clapet-navette multi-positions selon la revendication 1 ou 2, comprenant en outre :
un ressort configuré pour fournir une force de rappel sur la navette,
la navette étant configurée pour se translater depuis la seconde position vers la première position lorsque le module de mousse est retiré du logement, la translation de la navette étant dépendante de la force de rappel fournie par le ressort.

4. Ensemble de clapet-navette multi-positions selon une quelconque revendication précédente, comprenant en outre :
une électrovanne électromécanique en communication fluidique avec le au moins un trajet d'écoulement,
l'électrovanne électromécanique étant configurée pour évacuer la vapeur du au moins un trajet d'écoulement dans un réservoir de fluide de l'appareil d'infusion d'aéronef lorsqu'elle est ouverte,
l'électrovanne électromécanique étant configurée pour permettre à la vapeur de traverser le au moins un trajet d'écoulement lorsqu'elle est fermée.

5. Ensemble de clapet-navette multi-positions selon une quelconque revendication précédente, comprenant en outre :
un ensemble de soupape de contre-pression configuré pour rentrer à l'intérieur d'une cavité définie par une ou plusieurs surfaces intérieures du logement, la cavité définie étant en communication fluidique avec le au moins un trajet d'écoulement, l'ensemble de soupape de contre-pression comprenant :
un champignon ; et
un ressort configuré pour fournir une force de rappel au champignon,
le champignon étant dans une première position configurée pour bloquer le au moins un trajet d'écoulement lorsque de la vapeur ayant une première quantité de pression de vapeur entre en contact avec le champignon,
le champignon étant dans une seconde position configurée pour permettre le passage à travers le au moins un trajet d'écoulement lorsque de la vapeur ayant une seconde quantité de pression de vapeur entre en contact avec le champignon.

6. Ensemble de clapet-navette multi-positions selon la revendication 5, la première quantité de pression de vapeur étant inférieure à la force de rappel fournie par le ressort et la seconde quantité de pression de vapeur étant supérieure à la force de rappel fournie par le ressort.

7. Ensemble de clapet-navette multi-positions selon une quelconque revendication précédente, configuré pour recevoir un module de détartrage, le module de détartrage étant configuré pour fournir à l'ensemble de clapet-navette multi-positions un fluide de détartrage, le fluide de détartrage étant configuré pour s'écouler à travers le au moins un trajet d'écoulement et la cavité de navette.

8. Ensemble de clapet-navette multi-positions selon la revendication 7, comprenant en outre :
un ensemble de soupape de contre-pression configuré pour rentrer à l'intérieur d'une cavité définie par une ou plusieurs surfaces intérieures du logement, la cavité définie étant en communication fluidique avec le au moins un trajet d'écoulement, l'ensemble de soupape de contre-pression comprenant :
un champignon ; et
un ressort configuré pour fournir une force de rappel au champignon,
le champignon étant dans une première position configurée pour bloquer le au moins un trajet d'écoulement lorsqu'un fluide de détartrage ayant une première quantité de pression de fluide entre en contact avec le champignon,
le champignon étant dans une seconde position configurée pour permettre le passage à travers le au moins un trajet d'écoulement lorsqu'un fluide de détartrage ayant une seconde quantité de pression de fluide entre en contact avec le champignon.

9. Ensemble de clapet multi-positions selon la revendication 8, la première quantité de pression de fluide étant inférieure à la force de rappel fournie par le ressort et la seconde quantité de pression de fluide étant supérieure à la force de rappel fournie par le ressort.

10. Ensemble de clapet multi-positions selon la revendication 7, 8 ou 9, comprenant en outre un interrupteur à lames souples configuré pour détecter une installation du module de détartrage.

11. Ensemble de clapet-navette multi-positions selon une quelconque revendication précédente, comprenant en outre un interrupteur à lames souples configuré pour détecter la position de la navette à l'intérieur de la cavité de navette.

12. Ensemble de clapet-navette multi-positions selon une quelconque revendication précédente, comprenant en outre un interrupteur à lames souples configuré pour détecter une installation d'un module de mousse sur le logement.

13. Ensemble de clapet-navette multi-positions selon une quelconque revendication précédente, le logement comprenant une section de logement avant et une section de logement arrière, la surface avant du logement étant une surface avant de la section de logement avant, une première partie de la cavité de navette étant définie par une ou plusieurs surfaces intérieures de la section de logement avant et une seconde partie de la cavité de navette étant définie par une ou plusieurs surfaces intérieures de la section de logement arrière.

14. Ensemble de clapet-navette multi-positions selon une quelconque revendication précédente, l'appareil d'infusion d'aéronef pouvant être installé dans un office d'aéronef d'un aéronef.

15. Appareil d'infusion d'aéronef, comprenant :
un réchauffeur de mousse (1108) ;
une buse à mousse (1104) ; et
l'ensemble de clapet-navette multi-positions selon une quelconque revendication précédente, dans lequel le au moins un trajet d'écoulement est configuré pour recevoir de la vapeur du réchauffeur de mousse.
